# EUROPÄISCHE PATENTANMELDUNG

(11) **EP 1 630 697 A1**
(43) Veröffentlichungstag der Anmeldung: **01.03.2006**
(21) Anmeldenummer: 05107515.8
(22) Anmeldetag: 16.08.2005
(51) Int. Cl.: G06F 17/30

(54) **Webserver zur dynamischen Erzeugung von Webinhalten auf Automatisierungsgeräten**

(30) Priorität: 26.08.2004 DE 102004041395
(71) Anmelder: SIEMENS AKTIENGESELLSCHAFT, 80333 München (DE)
(72) Erfinder: Erlmann, Markus, 90449, Nürnberg (DE); Talanis, Thomas, 91336, Heroldsbach (DE); Volkmann, Frank, 90475, Nürnberg (DE)

(57) **Zusammenfassung**

Die Erfindung betrifft ein Verfahren und eine Vorrichtung sowie ein Automatisierungsgerät zur dynamischen Erzeugung von in einer Auszeichnungssprache erstellten, mittels eines Webbrowsers darstellbaren Daten. Um einen Webserver zur dynamischen Erzeugung von Webseiten bereitzustellen, der möglichst geringe Ressourcen auf der Zielmaschine benötigt, wird vorgeschlagen, dass
- mit Hilfe einer ersten Datenverarbeitungseinheit (1) zumindest ein ausführbares Programmmodul auf Basis zumindest einer Textdatei erzeugt wird,
- das Programmmodul in mindestens eine zweite Datenverarbeitungseinheit (2) geladen wird und
- das Programmmodul von der zweiten Datenverarbeitungseinheit (2) zur Erzeugung der mittels des Webbrowsers darstellbaren Daten ausgeführt wird.

## Beschreibung

Die Erfindung betrifft ein Verfahren und eine Vorrichtung zur Erzeugung von in einer Auszeichnungssprache erstellten, mittels eines Webbrowsers darstellbaren Daten.

Ein derartiges Verfahren bzw. eine derartiger Vorrichtung kommen beispielsweise bei Internettechnologien zum Einsatz, bei denen Webinhalte von einem Webserver generiert werden, die von einem Client mittels des Webbrowsers dargestellt werden können.

In der Automatisierungstechnik werden Internettechnologien wie HTTP vermehrt zur Kommunikation mit einem Automatisierungsgerät via Internet oder Intranet eingesetzt. Mit Hilfe eines Internetbrowsers wie beispielsweise des Microsoft Internet Explorers oder Netscape kann eine Fernbedienung oder eine Remote Konfiguration so genannter Embedded Systems oder Embedded Devices realisiert werden. Vorraussetzung hierfür ist, dass die Embedded Systems bzw. Embedded Devices über einen Webserver verfügen.

Ein Problem bei der Realisierung eines Webservers auf einem Embedded Device wie z. B. einem Automatisierungsgerät basiert auf den geringen Ressourcen, die von einem solchen Gerät zur Implementierung des Webserverdienstes bereit gestellt werden.

In DE 102 37 875 A1 wird eine Vorrichtung und ein Verfahren vorgeschlagen, die dazu dienen, auf Automatisierungsgeräten, die aufgrund ihrer geringen Ressourcen keine eigene Dateiverzeichnisstruktur bereitstellen können, sehr leicht mit Hilfe einer internetfähigen Sprache, insbesondere XML, eine Dateiverzeichnisstruktur innerhalb einer solchen XML-Datei darzustellen und/oder abzubilden und durch Senden der Datei auf das Automatisierungsgerät zu bringen, so dass das Automatisierungsgerät als Webserver arbeitet und so einen Remote-Zugriff ermöglicht. Durch eine derartige Dateiverzeichnisstruktur können Objekte, die sich auf dem Zielsystem befinden, adressiert werden.

Zur dynamischen Erzeugung von HTML- und XML-Ausgaben eines Webservers ist von Sun Microsystems die JSP Technolgie (Java Server Pages) entwickelt worden. Die JSP Technologie erlaubt es, Java-Code und spezielle JSP Aktionen in statischen, in HTML oder XML implementierten Inhalt einzubetten. Die resultierende Java Server Page kann mit Hilfe eines speziellen JSP Compilers in Java-Quellcode umgewandelt werden. Hierbei entsteht ein so genanntes Java Servlet, welches im Anschluss unter Verwendung eines Java-Compilers in einen auf einer Java Virtual Machine (Java VM) lauffähigen Bytecode umgewandelt wird.

Aufgrund der geringen Ressourcen, die von Embedded Devices wie Automatisierungsgeräten zur Verfügung gestellt werden, können bisher jedoch nur statische Webinhalte von einem Webserver auf einem Embedded Device bereitgestellt werden. Die Implementierung von JSP verlangt einen großen Ressourceneinsatz, den ein Automatisierungsgerät naturgemäß nicht leisten kann.

Der Erfindung liegt die Aufgabe zu Grunde, einen Webserver zur dynamischen Erzeugung von Webseiten bereitzustellen, der möglichst geringe Ressourcen auf der Zielmaschine benötigt.

Diese Aufgabe wird durch ein Verfahren zur dynamischen Erzeugung von in einer Auszeichnungssprache erstellten, mittels eines Webbrowsers darstellbaren Daten gelöst, bei dem
- mit Hilfe einer ersten Datenverarbeitungseinheit zumindest ein ausführbares Programmmodul auf Basis zumindest einer Textdatei erzeugt wird,
- das Programmmodul in mindestens eine zweite Datenverarbeitungseinheit geladen wird und
- das Programmmodul von der zweiten Datenverarbeitungseinheit zur Erzeugung der mittels des Webbrowsers darstellbaren Daten ausgeführt wird.

Die Aufgabe wird weiter durch eine Vorrichtung zur dynamischen Erzeugung von in einer Auszeichnungssprache erstellten, mittels eines Webbrowsers darstellbaren Daten gelöst mit
- mindestens einer ersten Datenverarbeitungseinheit zur Erzeugung zumindest eines ausführbaren Programmmoduls auf Basis zumindest einer Textdatei und
- mindestens einer zweiten Datenverarbeitungseinheit, in die das Programmmodul ladbar ist und die zur Erzeugung der mittels des Webbrowsers darstellbaren Daten vorgesehen ist.

Diese Aufgabe wird ferner gelöst durch ein Automatisierungsgerät mit einer Datenverarbeitungseinheit zur Speicherung und Ausführung zumindest eines außerhalb des Automatisierungsgerätes generierten, ausführbaren Programmmoduls, wobei das Programmmodul zur dynamischen Erzeugung mittels eines Webbrowsers darstellbarer Daten vorgesehen ist.

Erfindungsgemäß wird die Erzeugung der dynamischen Webinhalte auf die zwei Datenverarbeitungseinheiten aufgeteilt. Auf der ersten Datenverarbeitungseinheit wird zunächst ein ausführbares Programmmodul generiert. Hierzu sind auf der ersten Datenverarbeitungseinheit zumindest ein Parser, ein Generator und ein Compiler vorhanden, mit denen aus der Textdatei, die den benötigten Quellcode enthält, das Programmmodul erzeugt wird. Da Parser, Generator und Compiler im Allgemeinen einen relativ großen Speicherplatz zu deren Implementierung benötigen, muss die erste Datenverarbeitungseinheit entsprechend große Ressourcen aufweisen.

Durch Ausführung des Programmmoduls lassen sich schließlich dynamische Webinhalte in Form der mittels des Webbrowsers darstellbaren Daten generieren. Erfindungsgemäß wird vorgeschlagen, dass zur Ausführung des Programmmoduls die zweite Datenverarbeitungseinheit vorgesehen ist. Hierzu wird zunächst das Programmmodul von der ersten Datenverarbeitungseinheit auf die zweite Datenverarbeitungseinheit geladen. Das Programmmodul ist in der Lage, auf Anfrage eine in einer Auszeichnungssprache erstellte Website dynamisch zu erzeugen, die von einem Webbrowser darstellbar ist. Somit arbeitet die zweite Datenverarbeitungseinheit als Webserver, der auf Anfragen eines Clients durch Zurückgabe einer dynamisch generierten Website reagieren kann.

Da die Generierung des Programmmoduls auf der ersten Datenverarbeitungseinheit vorgesehen ist, muss die zweite Datenverarbeitungseinheit keine Ressourcen für die Komponenten Parser, Generator und Compiler bereitstellen. Die zweite Datenverarbeitungseinheit muss lediglich genügend Ressourcen zur Installation einer zur Ausführung des Programmmoduls erforderlichen Laufzeitumgebung sowie zur Speicherung des oder der kompilierten Programmmodule bereitstellen.

Der geringe Ressourcenbedarf der zweiten Datenverarbeitungseinheit ist dann besonders vorteilhaft, wenn das Programmmodul in ein Automatisierungsgerät geladen wird, wobei das Automatisierungsgerät die zweite Datenverarbeitungseinheit aufweist. Es liegt in der Natur von Embedded Devices wie Automatisierungsgeräten, dass deren Ressourcen zur Verwaltung von Softwarekomponenten sehr eng begrenzt sind. Daher ist die erfindungsgemäße Aufteilung des Generierungsprozesses der dynamischen Webinhalte auf die erste und die zweite Datenverarbeitungseinheit gerade dann besonders vorteilhaft, wenn die zweite Datenverarbeitungseinheit Bestandteil des Automatisierungsgerätes ist und somit nur geringe Ressourcen aufweist. Bei einer derartigen Ausführungsform der Erfindung wird somit erstmals ein Automatisierungsgerät mit Webserverfunktionalität zur Verfügung gestellt, welches dynamische Webinhalte bereitstellen kann.

Bei einer vorteilhaften Ausführungsform des erfindungsgemäßen Verfahrens ist die Auszeichnungssprache XML oder SGML basiert. Auf Basis des XML (Extensible Markup Language) oder SGML (Standard Generalized Markup Language) Standards sind zahlreiche Auszeichnungssprachen definiert worden, die mittels eines Webbrowsers darstellbare Informationen beschreiben können.

Eine sehr verbreitete Sprache, in der Texte für das World Wide Web erstellt werden, ist HTML (Hypertext Markup Language). Daher ist es zweckmäßig, dass die Auszeichnungssprache HTML basiert ist. HTML ist zunächst auf dem SGML Standard definiert worden und später in der Metasprache XML neu definiert.

In einer weiteren vorteilhaften Ausführungsform der Erfindung enthält die Textdatei in einer objektorientierten Programmiersprache, insbesondere in Java, erstellte Textfragmente. Aus diesen Textfragmenten lassen sich Quelltexte generieren, die einmal kompiliert auf der zweiten Datenverarbeitungseinheit dynamisch HTML-Seiten generieren. Bei den in Java geschriebenen Programmmodulen spricht man auch von so genannten Java Servlets.

Neben dem Java Code enthält die Textdatei zweckmäßigerweise in der Auszeichnungssprache erstellte Textfragmente. Beispielsweise können HTML Fragmente bereits in der Textdatei vorhanden sein, die einen Teil der in der Auszeichnungssprache erstellten, mittels eines Webbrowsers darstellbaren Daten bilden.

In einem solchen Fall ist es sinnvoll, dass zur Generierung des Programmmoduls nur die in der objektorientierten Programmiersprache erstellten Textfragmente der Textdatei verwendet werden. Die in der Auszeichnungssprache erstellten Textfragmente der Textdatei können ohne Kompilierung auf der zweiten Datenverarbeitungseinheit abgelegt werden. Dieser HTML Anteil ist auch ohne neue Generierung änderbar bzw. auf der zweiten Datenverarbeitungseinheit austauschbar. Somit können z. B. die von dem Programmmodul erzeugten HTML Daten mit verschiedenen auf der zweiten Datenverarbeitungseinheit abgelegten statischen HTML Fragmenten kombiniert werden, wodurch ein weiterer Freiheitsgrad bei der Erstellung dynamischer Webinhalte beispielsweise mittels eines Automatisierungsgerätes bereitgestellt wird.

In einer vorteilhaften Ausführungsform der Erfindung ist die Textdatei als Java Server Page ausgeführt. Java Server Pages (JSP) ist eine Technologie, die im Wesentlichen zur einfachen dynamischen Generierung von HTML-Ausgaben durch einen Webserver dient. Bei JSP kann Java Quellcode in statischen HTML basierten Text eingebettet werden.

Insbesondere bei einer Verwendung von in Java erstellten Textfragmenten innerhalb der Textdatei kann das Programmmodul in Form eines maschinenunabhängigen Bytecodes generiert werden. Da die Programmiersprache Java plattformunabhängig ist, sind Java Programme unabhängig von dem eingesetzten Betriebssystem und der Hardware der zweiten Datenverarbeitungseinheit lauffähig. Das kompilierte Java Programmmodul besteht aus einem Bytecode, der eine softwarebasierte Laufzeitumgebung, eine so genannte Java Virtual Machine, benötigt. Die Java Virtual Machine ist auf der zweiten Datenverarbeitungseinheit installiert, um hier ein Ausführung kompilierter Java Servlets zu gewährleisten.

Um eine höhere Verarbeitungsgeschwindigkeit des Webservers zu erzielen, kann aber auch das Programmmodul in Form eines maschinenabhängigen Maschinencodes generiert wird. Hierzu müssen die hardwaretechnischen und softwaretechnischen Vorraussetzungen der zweiten Datenverarbeitungseinheit berücksichtigt werden.

Vorteilhafterweise ist die erste Datenverarbeitungseinheit als Engineeringsystem ausgeführt. Mit dem Engineeringsystem werden die kompilierten Programmmodule schon in einer Engineeringphase insbesondere eines Automatisierungssystems auf der ersten Datenverarbeitungseinheit erzeugt. Anforderungen von Webinhalten zur Laufzeit werden dann ausschließlich von der zweiten Datenverarbeitungseinheit erwidert. Hierzu werden mit der zweiten Datenverarbeitungseinheit die Programmmodule ausgeführt, die zuvor mit dem Engineeringsystem auf Basis der Textdatei erzeugt wurden. Die Programmmodule werden zu diesem Zweck im Rahmen der Engineeringphase in die zweite Datenverarbeitungseinheit, die beispielsweise Bestandteil eines Automatisierungsgerätes ist, geladen.

Im Folgenden wird die Erfindung anhand der in den Figuren dargestellten Ausführungsbeispiele näher beschrieben und erläutert. Es zeigen:
- FIG 1: eine vernetzte Konfiguration bestehend aus einer ersten Datenverarbeitungseinheit, einem Automatisierungsgerät mit einer zweiten Datenverarbeitungseinheit und weiteren Datenverarbeitungseinheiten,
- FIG 2: ein Flussdiagramm eines herkömmlichen Verfahrens zur Erzeugung dynamischer Webinhalte und
- FIG 3: Flussdiagramme einer Ausführungsform des erfindungsgemäßen Verfahrens zur Erzeugung dynamischer Webinhalte

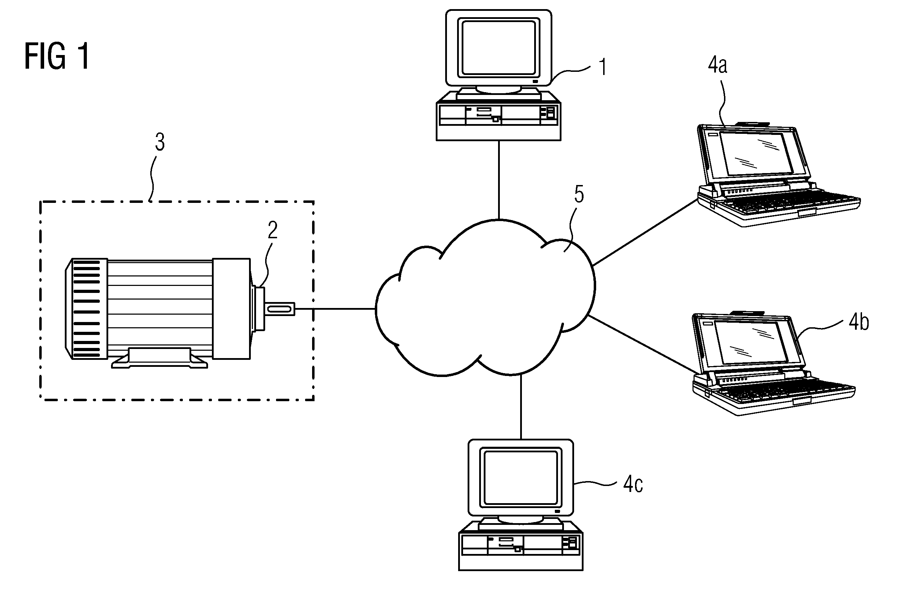

FIG 1 zeigt eine vernetzte Konfiguration bestehend aus einer ersten Datenverarbeitungseinheit 1, einem Automatisierungsgerät 3 mit einer zweiten Datenverarbeitungseinheit 2 und weiteren Datenverarbeitungseinheiten 4a,4b,4c. Sämtliche Datenverarbeitungseinheiten 1,2,4a,4b,4c sind über ein Computernetzwerk 5, bei dem es sich beispielsweise um das Internet handeln soll, verbunden. Selbstverständlich kann es sich auch um andere Ausprägungen eines Computernetzwerks handeln wie ein Intranet.

Bei der ersten Datenverarbeitungseinheit 1 handelt es sich um ein Engineeringsystem, mit dem kompilierte Programmmodule generiert werden, die zur Erzeugung dynamischer Webinhalte angewendet werden können. Im Falle einer JSP Verarbeitung handelt es beispielsweise bei der Textdatei um eine Java Server Page und bei dem Programmmodul um ein Java Servlet. Die kompilierten Java Servlets werden von dem Engineeringsystem 1 über das Internet 5 auf die zweite mit dem Automatisierungsgerät 3 verbundene Datenverarbeitungseinheit 2 geladen.

Mit Hilfe der zweiten Datenverarbeitungseinheit 2 und den geladenen Servlets ist das Automatisierungsgerät 3 in der Lage, als dynamischer Webserver zu fungieren. Somit können die weiteren Datenverarbeitungseinheit 4a,4b,4c, bei denen es sich beispielsweise um PCs oder Laptops in einer Industrieumgebung handelt, mit dem Automatisierungsgerät über einen Webbrowser wie Netscape oder den Internet Explorer kommunizieren. Die weiteren Datenverarbeitungseinheiten 4a,4b,4c arbeiten also als Clients in dem dargestellten Netzwerk. Auf diese Weise wird unter zu Hilfenahme des Internets beispielsweise eine Remote Konfiguration des Automatisierungsgerätes mit den Clients 4a,4b,4c ermöglicht.

Selbstverständlich können auf diese Weise auch mehrere mit dem Internet verbundene Automatisierungsgeräte als Webserver dienen, auf die von einem zentralen Engineeringsystem oder von mehreren Engineeringsystemen Java Servlets geladen werden, die eine dynamische Bereitstellung von Webinhalten ermöglichen.

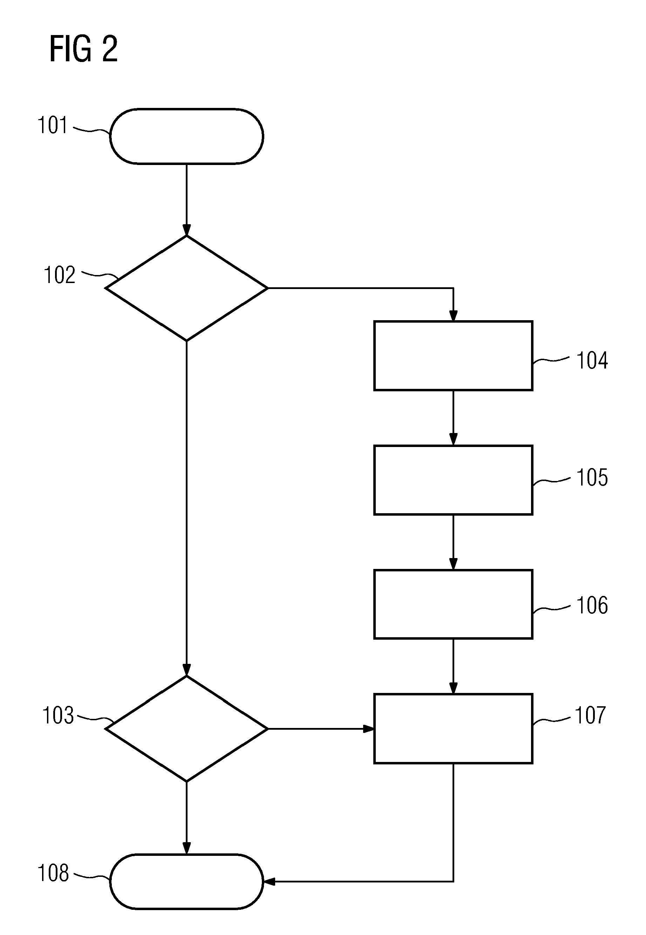

FIG 2 zeigt ein Flussdiagramm eines herkömmlichen Verfahrens zur Erzeugung dynamischer Webinhalte. Dargestellt ist eine JSP Verarbeitung innerhalb einer als Webserver arbeitenden Datenverarbeitungseinheit.

Das Flussdiagramm enthält die folgenden Elemente:
- 101: Startpunkt: Anforderung einer JSP
- 102: Verzweigung: Servlet vorhanden?
- 103: Verzweigung: Servlet geladen?
- 104: JSP Parsen
- 105: Servlet Code generieren
- 106: Servlet compilieren
- 107: Servlet laden
- 108: Endpunkt: Rückgabe einer HTML Seite

Nach der Anforderung einer Java Server Page (JSP) 101 wird zunächst im Schritt 102 überprüft, ob ein entsprechendes Java Servlet in der Datenverarbeitungseinheit vorhanden ist. Ist dies der Fall, wird im nächsten Schritt 103 überprüft, ob das Servlet zur Ausführung geladen ist. Falls ja, wird das Servlet ausgeführt und eine entsprechende HTML Seite zurückgegeben. Diese Aktion stellt den Endpunkt 108 des Flussdiagramms dar. Andernfalls wird das benötigte Servlet im Schritt 107 zunächst geladen.

Wird jedoch im Schritt 102 festgestellt, dass das erforderliche Servlet nicht vorhanden ist, wird auf die Schritte 104,105,106 und 107 verzweigt. In diesen Schritten wird zunächst die JSP geparst 104, anschließend der Servlet Quelltext generiert 105 und schließlich das Servlet kompiliert 106. Im Schritt 107 wird das kompilierte Servlet zur Ausführung geladen. Durch Ausführung des Servlets wird die HTML Seite zurückgegeben 108.

Bei diesem aus dem Stand der Technik bekannten Verfahren zur Erzeugung dynamischer Webinhalte müssen Parser, Generator und Compiler auf der als Webserver dienenden Datenverarbeitungseinheit installiert sein. Dementsprechend muss die Datenverarbeitungseinheit genügen Ressourcen zur Installation dieser Komponenten bereitstellen.

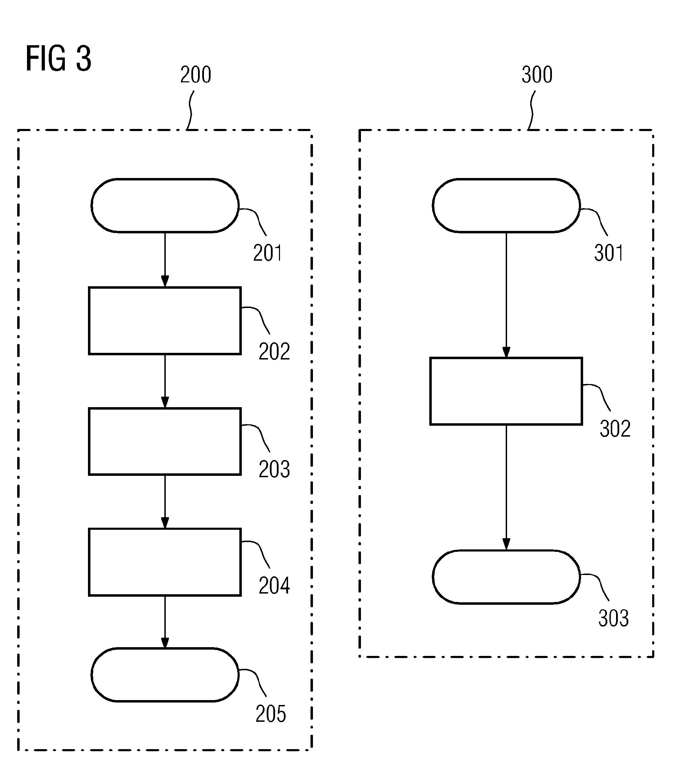

FIG 3 zeigt Flussdiagramme einer Ausführungsform des erfindungsgemäßen Verfahrens zur Erzeugung dynamischer Webinhalte auf Basis einer JSP Verarbeitung. Das Verfahren gliedert sich in zwei Phasen, eine Engineeringphase 200, die auf einer ersten Datenverarbeitungseinheit abläuft, und eine Verarbeitungsphase zur Laufzeit 300, die beispielsweise auf einer in einem Automatisierungsgerät integrierten zweiten Datenverarbeitungseinheit abläuft.

Das erste Flussdiagramm zur Beschreibung der Engineeringphase 200 enthält folgende Elemente:
- 201: Startpunkt: Generierung von Bytecode
- 202: JSP Parsen
- 203: Servlet Code generieren
- 204: Servlet kompilieren
- 205: Endpunkt: Bytecode auf zweite Datenverarbeitungseinheit laden

In der Engineeringphase 200 werden ein oder mehrere Java Servlets generiert und kompiliert. Hierzu müssen auf der ersten Datenverarbeitungseinheit ein Parser, ein Generator und ein Compiler installiert sein. Nach dem Parsen 202 der JSP wird zunächst der Quellcode des Java Servlets generiert 203. Nach dem Kompilieren 204 des Quellcodes steht ein Bytecode zur Verfügung, der schließlich in die zweite Datenverarbeitungseinheit geladen wird. Dieser Schritt markiert den Endpunkt 205 der Engineeringphase 200.

Die Verarbeitungsphase zur Laufzeit 300 enthält die folgenden Elemente:
- 301: Startpunkt: Anforderung einer JSP
- 302: Servlet laden
- 303: Endpunkt: Rückgabe einer HTML Seite

Die in das Automatisierungsgerät integrierte zweite Datenverarbeitungseinheit lädt zur Laufzeit auf Anfrage ein bereits kompiliertes Java Servlet und erzeugt durch Ausführung des Servlets die geforderte HTML Seite. Somit arbeitet das Automatisierungsgerät bzw. die zweite Datenverarbeitungseinheit als Webserver zur Erzeugung dynamischer Webinhalte, ohne hierfür die ressourcenaufwendige Installation von Parser, Generator und Compiler zur JSP Verarbeitung zu benötigen. Auf der zweiten Datenverarbeitungseinheit wird lediglich eine Java Virtual Machine benötigt, um den von der ersten Datenverarbeitungseinheit erzeugten Bytecode ausführen zu können.

Neben den Java Servlets können auch noch HTML Fragmente auf der zweiten Datenverarbeitungseinheit abgelegt werden. Diese HTML Fragmente können auch auf der zweiten Datenverarbeitungseinheit noch verändert werden. Auf diese Weise besteht eine zusätzliche Möglichkeit, Einfluss auf die Ausgabe der Webinhalte zu nehmen, ohne eine Neugenerierung der Java Servlets zu erfordern.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke, die Generierung der Programmmodule bzw. Servlets und deren Ausführung auf mindestens zwei Datenverarbeitungseinheiten aufzuteilen, erhalten bleibt. Zum Beispiel lässt sich das erfindungsgemäße Verfahren auch zur Erzeugung dynamischer Webinhalte mittels der von Microsoft entwickelten Active Server Pages Technologie (ASP) anstelle der JSP Technologie anwenden.

## Patentansprüche

1. Verfahren zur dynamischen Erzeugung von in einer Auszeichnungssprache erstellten, mittels eines Webbrowsers darstellbaren Daten, bei dem
• mit Hilfe einer ersten Datenverarbeitungseinheit (1) zumindest ein ausführbares Programmmodul auf Basis zumindest einer Textdatei erzeugt wird,
• das Programmmodul in mindestens eine zweite Datenverarbeitungseinheit (2) geladen wird und
• das Programmmodul von der zweiten Datenverarbeitungseinheit (2) zur Erzeugung der mittels des Webbrowsers darstellbaren Daten ausgeführt wird.

2. Verfahren nach Anspruch 1,
**dadurch gekennzeichnet, dass** das Programmmodul in ein Automatisierungsgerät (3) geladen wird, wobei das Automatisierungsgerät (3) die zweite Datenverarbeitungseinheit (2) aufweist.

3. Verfahren nach einem der vorhergehenden Ansprüche,
**dadurch gekennzeichnet, dass** die Auszeichnungssprache XML oder SGML basiert ist.

4. Verfahren nach Anspruch 3,
**dadurch gekennzeichnet, dass** die Auszeichnungssprache HTML basiert ist.

5. Verfahren nach einem der vorhergehenden Ansprüche,
**dadurch gekennzeichnet, dass** die Textdatei in einer objektorientierten Programmiersprache, insbesondere in Java, erstellte Textfragmente enthält.

6. Verfahren nach einem der vorhergehenden Ansprüche,
**dadurch gekennzeichnet, dass** die Textdatei in der Auszeichnungssprache erstellte Textfragmente enthält.

7. Verfahren nach einem der vorhergehenden Ansprüche,
**dadurch gekennzeichnet, dass** zur Generierung des Programmmoduls nur die in der objektorientierten Programmiersprache erstellten Textfragmente der Textdatei verwendet werden.

8. Verfahren nach einem der vorhergehenden Ansprüche,
**dadurch gekennzeichnet, dass** die Textdatei als Java Server Page ausgeführt ist.

9. Verfahren nach einem der vorhergehenden Ansprüche,
**dadurch gekennzeichnet, dass** das Programmmodul in Form eines maschinenunabhängigen Bytecodes generiert wird.

10. Verfahren nach einem der Ansprüche 1 bis 8,
**dadurch gekennzeichnet, dass** das Programmmodul in Form eines maschinenabhängigen Maschinencodes generiert wird.

11. Vorrichtung zur dynamischen Erzeugung von in einer Auszeichnungssprache erstellten, mittels eines Webbrowsers darstellbaren Daten mit
• mindestens einer ersten Datenverarbeitungseinheit (1) zur Erzeugung zumindest eines ausführbaren Programmmoduls auf Basis zumindest einer Textdatei und
• mindestens einer zweiten Datenverarbeitungseinheit (2), in die das Programmmodul ladbar ist und die zur Erzeugung der mittels des Webbrowsers darstellbaren Daten vorgesehen ist.

12. Vorrichtung nach Anspruch 11,
**dadurch gekennzeichnet, dass** das die zweite Datenverarbeitungseinheit (2) Bestandteil eines Automatisierungsgerätes (3) ist.

13. Vorrichtung nach einem der Ansprüche 11 oder 12,
**dadurch gekennzeichnet, dass** die Vorrichtung derart ausgeführt ist, dass in einer XML und/oder SGML basierten Auszeichnungssprache erstellte Daten erzeugbar sind.

14. Vorrichtung nach Anspruch 13,
**dadurch gekennzeichnet, dass** die Vorrichtung derart ausgeführt ist, dass in einer HTML basierten Auszeichnungssprache erstellte Daten erzeugbar sind.

15. Vorrichtung nach einem der Ansprüche 11 oder 14,
**dadurch gekennzeichnet, dass** die erste Datenverarbeitungseinheit (1) derart ausgeführt ist, dass das Programmmodul auf Basis einer Textdatei erzeugbar ist, die in einer objektorientierten Programmiersprache, insbesondere in Java, erstellte Textfragmente enthält.

16. Vorrichtung nach einem der Ansprüche 11 oder 15,
**dadurch gekennzeichnet, dass** die erste Datenverarbeitungseinheit (1) derart ausgeführt ist, dass das Programmmodul auf Basis einer Textdatei erzeugbar ist, die in der Auszeichnungssprache erstellte Textfragmente enthält.

17. Vorrichtung nach einem der Ansprüche 11 oder 16,
**dadurch gekennzeichnet, dass** die erste Datenverarbeitungseinheit (1) derart ausgeführt ist, dass sie zur Generierung des Programmmoduls auf Basis nur der in der objektorientierten Programmiersprache erstellten Textfragmente der Textdatei dient.

18. Vorrichtung nach einem der Ansprüche 11 oder 17,
**dadurch gekennzeichnet, dass** die erste Datenverarbeitungseinheit (1) derart ausgeführt ist, dass das Programmmodul auf Basis einer als Java Server Page erstellten Textdatei erzeugbar ist.

19. Vorrichtung nach einem der Ansprüche 11 oder 18,
**dadurch gekennzeichnet, dass** die erste Datenverarbeitungseinheit (1) derart ausgeführt ist, dass das Programmmodul in Form eines maschinenunabhängigen Bytecodes generierbar ist.

20. Vorrichtung nach einem der Ansprüche 11 oder 18,
**dadurch gekennzeichnet, dass** die erste Datenverarbeitungseinheit (1) derart ausgeführt ist, dass das Programmmodul in Form eines maschinenabhängigen Maschinencodes generierbar ist.

21. Vorrichtung nach einem der Ansprüche 11 oder 20,
**dadurch gekennzeichnet, dass** die erste Datenverarbeitungseinheit (1) als Engineeringsystem ausgeführt ist.

22. Automatisierungsgerät (3) mit einer Datenverarbeitungseinheit (2) zur Speicherung und Ausführung zumindest eines außerhalb des Automatisierungsgerätes generierten, ausführbaren Programmmoduls, wobei das Programmmodul zur dynamischen Erzeugung mittels eines Webbrowsers darstellbarer Daten vorgesehen ist.
